# EUROPEAN PATENT SPECIFICATION

(11) **EP 1 952 561 B1**
(45) Date of publication and mention of the grant of the patent: **04.04.2018**
(21) Application number: 06790880.6
(22) Date of filing: 24.10.2006
(51) Int. Cl.: H04B 10/071, G01M 11/00

(54) **METHOD AND APPARATUS FOR IDENTIFICATION OF MULTIPLE FIBERS USING AN OTDR**
VERFAHREN UND VORRICHTUNG ZUR IDENTIFIKATION MEHRERER FASERN UNTER VERWENDUNG EINES OTDR
PROCEDE ET APPAREIL D'IDENTIFICATION D'UNE PLURALITE DE FIBRES A L'AIDE D'UN REFLECTOMETRE OPTIQUE TEMPOREL

(30) Priority: 24.10.2005 US 729237 P
(43) Date of publication of application: 06.08.2008
(73) Proprietor: Exfo Inc., Vanier, Québec G1M 2K2 (CA)
(72) Inventor: PERRON, Stéphane, Sainte-Hélène-de-Breakeyville Quebec G0S 1E2 (CA); RUCHET, Bernard, Quebec, Quebec G1H 7G4 (CA); LEBLANC, Michel, Quebec, Quebec G1W 2J6 (CA)
(74) Representative: HGF Limited
(86) International application number: PCT/CA2006/001732
(87) International publication number: WO 2007/048226

(56) References cited:
- EP-A1- 1 059 518
- WO-A1-96/31022
- WO-A1-2005/020478
- CA-A1- 2 187 132
- US-A- 5 321 541
- US-A- 5 506 674
- US-A1- 2003 012 514
- US-A1- 2005 146 711
- US-B1- 6 396 575

## Description

### CROSS-REFERENCE TO RELATED DOCUMENTS

The present application is related to Disclosure Document No. 583369 entitled "Improved Multi-Fiber Receive Box for OTDR Testing", filed in the United States Patent and Trademark Office on August 4, 2005, and to Disclosure Document No. 584846 entitled "Improved Multi-Fiber Receive Box for OTDR - Application", filed in the United States Patent and Trademark Office on August 29, 2005. The reader is directed to these documents for reference.

### TECHNICAL FIELD

The invention relates to a method of and apparatus for identifying each of a plurality of optical fibers by means of an optical time domain reflectometer (OTDR).

### BACKGROUND ART

Optical Time Domain Reflectometers (OTDRs) are commonly used to characterize an optical fiber. Their use permits single-ended measurements that allow measurements to be undertaken with only one field technician, thereby reducing the expense associated with additional testing personnel. Typically an OTDR can provide total loss, length and return loss of a fiber, as well as localize loss and reflectance at each joint (splice or connector). In order to characterize the input and output connectors of a fiber optic link, it is usual to add a proper lead-in ("launch") fiber and a termination fiber (sometimes referred to as a "receive" fiber) in order to provide a reference backscattering level before and after each connector. This method is well known by the users of OTDR.

It is frequently required, such as in a Fiber-To-The-Home (FTTH) passive optical network (PON), to test a cable that contains many fibers and to ensure that, at the distal end of the cable under test, the constituent fibers are correctly identified for subsequent connection to a patch panel or fiber distribution hub (FDH). The fiber distribution hub normally comprises at least one 1xN (where N is frequently equal to 32) passive splitter, to which N different fibers may be attached. The cable-under-test generally comprises a subset (e.g. 4) of these N different fibers and terminates at a terminal drop box (DB), from whence the OTDR measurement is launched.

It is known, when testing a cable that contains many fibers, to connect the OTDR to each fiber-under-test (FUT) in turn using a single launch fiber, while the distal end of each of the fibers-under-test (FUTs) remains connected to the FDH or patch panel. However, this approach is not always feasible in an active (i.e. operational/in service) passive optical network (PON), since the launched OTDR light may interfere with system operation.

An alternative known approach, when testing a cable that contains many fibers, is to connect the OTDR to each fiber-under-test (FUT) in turn using a single launch fiber, while the distal end of each of the fibers-under-test (FUTs) is connected to a respective one of a series of termination fibers. While a single launch fiber will usually suffice because the user can easily move it from one fiber input to each of the others, it is preferable to use a series of termination fibers because it obviates the need for the user to go to the FDH and back to the terminal drop box, between measurements, to move the termination fiber from the distal end of one FUT to the next.

It is often desirable to be able to determine which termination fiber is detected on the OTDR trace. The mapping between the ends of the FUTs and the termination fibers allows determination of which distal fiber end corresponds to a given input fiber. This feature is very useful since it can detect errors in fiber marking and cable deployment.

One approach is to use a multi-fiber receive box wherein each of the termination fibers is of a different length, this difference in length being sufficiently large so as to be readily resolvable by the OTDR. The reflection from the end of each termination fiber, whether arising from the approximately 4% Fresnel reflection at a perpendicularly-cleaved glass-air interface or from some explicit reflective element (e.g. end mirror, broadband Bragg reflector, etc.), yields a clearly visible peak on the OTDR trace. Hence, when testing with an OTDR, the length of the termination fiber can in principle be determined, thereby allowing determination of which termination fiber (R1 to R4) is present.

A limitation of this technique is that, when the connector between the fiber end and the receive box has a very low reflectance and loss, such is generally the case when an APC (Angled Physical Contact) type of connector is used, the reflectance of such connectors, when mated, is often negligibly small and, hence, undetectable with an OTDR. The detection of a reflectance "event" at the distal end of the FUT, yielding a peak on the OTDR trace, provides an important reference point for calculating the end of the termination fiber. If the connection between the fiber end and the termination fiber box cannot be detected, the length of the termination fiber often cannot be reliably determined, which makes it very difficult to verify that the fiber end is properly mapped, as well as rendering the FUT loss measurement less precise.

WO 96/31022 discloses an optical network which includes a plurality of branches in an optical fiber line between a station-end and a plurality of end user. The network includes a combination of reflectors which create a reflection pattern that is unique to each end user.

### SUMMARY OF THE INVENTION:

The present invention seeks to eliminate, or at least mitigate, the disadvantages of the prior art discussed above, or at least provide an alternative. To this end, embodiments of the present invention apply to each OTDR trace a unique signature enabling identification of each fiber by detecting its signature in the corresponding trace.

According to one aspect of the present invention, there is provided a method according to claim 1. In preferred embodiments, each signature comprises an OTDR trace event caused by a physical phenomenon or combination of phenomena along the fiber.

Thus, in the context of this specification, an OTDR backscatter trace "event" is a change in the backscatter signal as a function of distance along the fiber caused by any physical phenomenon or combination of physical phenomena, such as reflection or attenuation, including wavelength dependence thereof, preferably localized within the spatial resolution of the OTDR. The said physical phenomenon or phenomena causing such "event" in the OTDR trace will be referred to herein as an "event feature".

Each of the signatures may be identified with the respective one of the said plurality of fibers by generating at least two backscatter events spaced apart from each other by a predetermined effective optical distance that is different from the predetermined distance between the at least two backscatter events of other signatures.

Alternatively, each of the signatures may be applied to the respective one of the said traces by amplitude modulation of at least one event, such that the event amplitude differs from one fiber signature to another.

The amplitude modulation may be provided by an event feature producing a predetermined change in value of a loss (or attenuation), a gain, or a reflectance.

Also disclosed is an apparatus for identifying each of a plurality of fibers (DF1/1, ...,DF2/4) comprising an OTDR for
launching light into a first end of each of the fibers in turn and obtaining a corresponding plurality of OTDR traces therefrom, and characterized by an event box (EB) for connection to opposite ends of the fibers comprising signature applying means comprising event feature means for producing in OTDR traces a plurality of unique signatures each comprising at least two events, each of the said at least two events being
detectable by at least one of its position, its amplitude, and a wavelength at which it is detected, each of the fibers being identifiable by detecting the said at least two events of the respective unique signature in the at least one OTDR trace corresponding to said respective signature applying means.

Also disclosed is a signature-applying means for use with an OTDR in identifying each of a plurality of fibers (DF1, ... ,DF4) having approximately the same length, the signature-applying means (EB) comprising event feature means for producing corresponding events in backscatter traces resulting from light launched into each of the fibers by the OTDR, thereby generating in said traces a plurality of signatures corresponding to the plurality of fibers, respectively,
each signature being unique and comprising at least two events in at least one trace, wherein each of the fibers is identifiable by detecting the said corresponding signature.

With regard to either of the apparatus and signature-applying means disclosed above, the signature-applying means may be arranged to generate the said signature for each of the said plurality of fibers by generating at least two backscatter events spaced apart from each other by a predetermined distance that is different from the predetermined distance
between the at least two backscatter events of other signatures.

Alternatively, the signature-applying means may generate the said signature for each of the said plurality of fibers by amplitude modulation of one or more backscatter events, such that the event amplitude differs from one fiber signature to another. The signature-applying means may comprise means for providing a predetermined value of a loss or attenuation to effect amplitude modulation of said one or more of the backscatter events.

For example, an event may be generated by one or more elements such as a single reflector, a mirror surface of a splitter/coupler, a single reflective Bragg grating or a single attenuator. Alternatively, it may comprise a combination of such elements, for example a splitter where one of the arms is terminated with a reflective surface at a short distance from the splitter, the splitter providing attenuation and the mirror providing the reflectance. Another combination might comprise two closely-spaced pairs of mating connectors, e.g., at respective ends of patch cords connecting the signature-applying means to a patch panel and the patch panel to each of the fibers under test (FUTs).

Preferably, the signature-applying means has a plurality of input ports for connection to respective connectors of the plurality of fibers, and a corresponding plurality of signature means coupled to the input ports, respectively, and each spaced from the respective input port by the same predetermined distance as the other signature means.

This enables the user to identify in each trace the portion corresponding to the location of the connection between the FUT and the signature-applying means, which might otherwise be difficult or impossible if the connector exhibits very low loss.

Preferably, each of the plurality of signature means at the predetermined spacing comprises a monitoring port which, when left open, generates a reflective said event in the corresponding OTDR trace signature. The monitoring port may be adapted for connection to an OTDR for launching light into the monitoring port and analyzing backscatter from the connection to the FUT to determine the quality of such connection.

Combination of the apparatus and signature applying means disclosed above allow the signatures to be identifiable by spacing and/or characteristics.

When testing optical fibers in cables in passive optical networks, for example, using an OTDR and a termination fiber at the other end of the FUT, it is desirable to be able to check the connection between the particular FUT and the termination fiber before a test technician travels to the opposite end of the FUT where the OTDR will be connected to initiate reflectometric testing.

Accordingly, the signature-applying means may further comprise a plurality of input ports for connection to respective ones of the plurality of fibers and a plurality of monitoring (or "output") ports connected internally to the input ports, the monitoring ports being adapted for connection to an OTDR to allow characterization of the connections between the input ports and the fibers.

The foregoing and other objects, features, aspects and advantages of the present invention will become more apparent from the following detailed description, in conjunction with the accompanying drawings, of preferred embodiments of the invention which are described by way of example only.

### BRIEF DESCRIPTION OF DRAWINGS

Figure 1(a), labeled PRIOR ART, is a simplified schematic diagram illustrating a typical portion of passive optical network connecting a central office to a group of subscribers by way of a fiber distribution hub (FDH) and several terminal drop boxes;
Figure 1(b) illustrates connection of an event signature-applying unit (EB) embodying the present invention to the drop boxes of a passive optical network;
Figure 2 is a simplified schematic diagram of an event signature-applying unit embodying the present invention in which each input port is coupled to two mutually spaced event features;
Figure 3 illustrates an event signature-applying unit in which some of the event features comprise monitoring ports and others comprise branching devices;
Figure 4 illustrates the use of wavelength-selective branching devices and fibers of different lengths to generate spaced events;
Figure 5 illustrates the use of lengths of different kinds of fiber, in series, to create the events; and
Figures 6(a) to 6(c) illustrate traces obtained using an OTDR and an event signature-applying unit embodying this invention.

### DESCRIPTION OF THE PREFERRED EMBODIMENTS

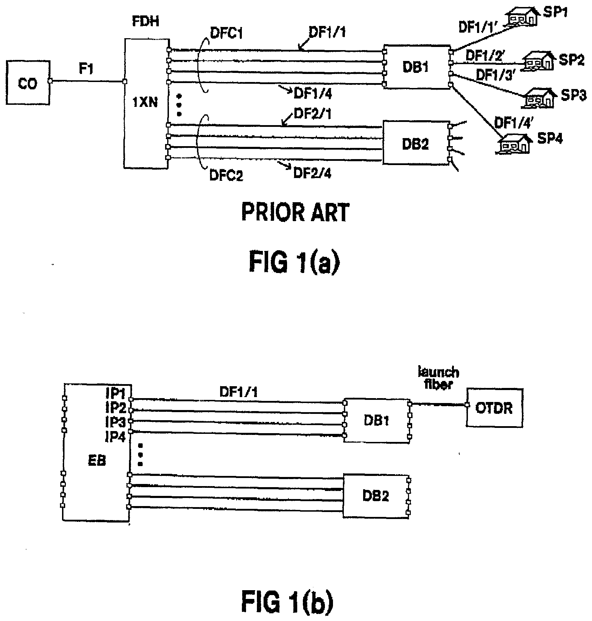

Referring to Figure 1(a), in a typical passive optical network a central office CO is connected by a trunk cable F1 to a fiber distribution hub (FDH). Within the FDH, at least one 1 x N coupler (not shown) connects the trunk fibers to several distribution fiber cables. Two distribution fiber cables DFC1 and DFC2 are shown, each comprising, for example, four fibers and connected to terminal drop boxes DB1 and DB2, respectively. There may be many more terminal drop boxes, but only two are shown so as to simplify the description. Also, although two distribution cables and associated drop boxes are shown, only the testing of one cable, DFC1, will be described, it being understood that the same description applies to both.

Terminal drop box DB1 connects its four distribution fibers DF1/1 - DF1/4 to four drop fibers DF1/1' to DF1/4' which connect to the subscriber premises SP1 to SP4, respectively. Terminal drop box DB2 is connected in a similar manner to another four subscriber premises.

During installation, and possibly afterwards, a technician will need to check the quality of the various connections between the concatenated fibers connecting a particular drop fiber to the FDH. This may be achieved by making a series of OTDR measurements from the ends of the distribution fibers DF1/1 to DF1/4 closest to the FDH.

A limitation of this approach is that, if the fibers are wrongly connected at the terminal drop box (DB1) on account of a misidentification of the fibers at either end of the distribution fiber cable (DFC1), it is not generally possible to detect this with the OTDR measurements alone. Frequently this incorrect connection would only be detected after system turn-on, when correcting the problem might be costly in terms of technician labor and time.

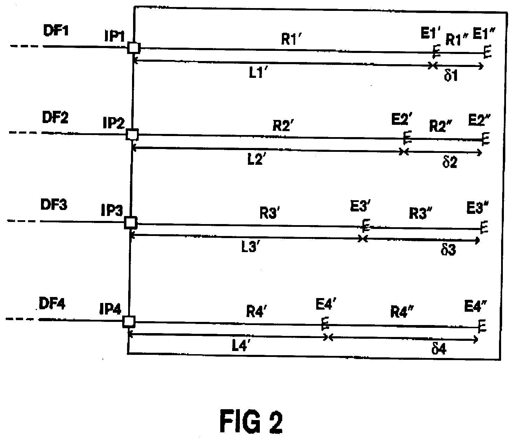

Preferred embodiments of the present invention address this limitation by attaching event signature-applying means in the form of an event signature applying unit or event feature box EB, to the end of the FUT remote from the OTDR, as shown in Figure 1(b). As shown in Figure 2, within the event feature box EB are several event signature-applying means or event features, each for applying a unique signature to the OTDR trace for each FUT. Input ports IP1 to IP4 of the event feature box EB are connected to distribution fibers DF1/1 to DF1/4, respectively. A first event feature E1' is provided at the junction between two termination fiber sections R1' and R1" and a second event feature E1" is connected to the distal end of termination fiber section R1". The length of termination fiber section R1' is L1' and the distance between the pair of event features E1' and E1" is shown as δ1.

Ports IP2 to IP4 are connected in a similar manner to the pairs of event features E2', E2", E3', E3" and E4', E4" by termination fiber sections R2', R2", R3', R3" and R4', R4", respectively. The distances between the pairs of event features E2', E2", E3', E3" and E4', E4" are *2, *3 and *4, respectively.

The distances between the input ports IP1 to IP4 and the furthermost features E1" to E4", respectively, are equal to each other. The distances L1' to L4', however, differ so that spacings *1, *2, *3 and *4 between respective pairs of events are not equal to each other. Consequently, during subsequent OTDR measurements of the four distribution fibers DF1/1 to DF1/4, while attached to input ports IP1 to IP4, respectively, the spacing between event pairs will allow the user to determine which of the distribution fibers DF1/1 to DF1/4 is connected to which of the input ports IP1 to IP4.

Once the event feature box EB, which includes the event features, has been installed and the connections made, the technician will carry out the measurements from the terminal drop box DB1 or from each of the subscriber premises SP1 to SP4, if they have been connected. An advantage of taking measurements from the subscriber premises is that each measurement is a true "end-to-end" measurement between each of SP1 to SP4 and the FDH. A disadvantage is that the technician must move between each subscriber premises for each measurement. In the case of a new FTTH deployment in a neighborhood, individual subscriber premises are often not yet connected (e.g. the drop lines are not installed), and the measurements will be carried out from the terminal drop box DB1. Herein, we describe measurements carried out from the drop box DB1, but the description can readily be extended to include measurements taken from the subscriber premises.

If measuring at the terminal drop box DB1, the technician will disconnect the ends of the distribution fibers DF1/1 to DF1/4 from the drop fibers DF1/1' to DF1/4', connect them instead, in turn, to the OTDR by means of the usual lead-in or launch fiber, and obtain an OTDR trace for each of the four distribution fibers DF1/1 to DF1/4, in known manner, i.e., by launching pulsed light into each fiber and capturing and temporally analyzing the backscattered light.

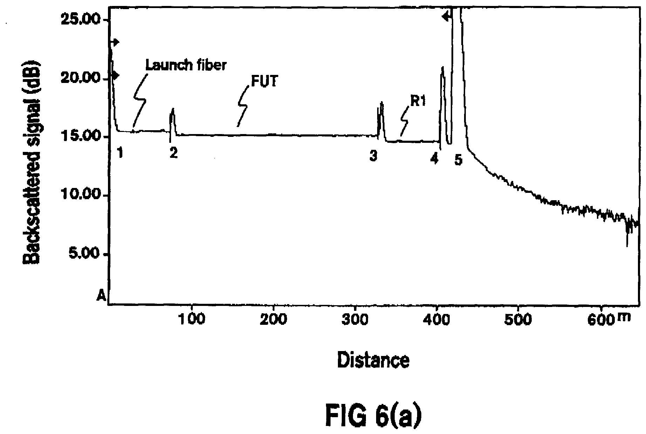

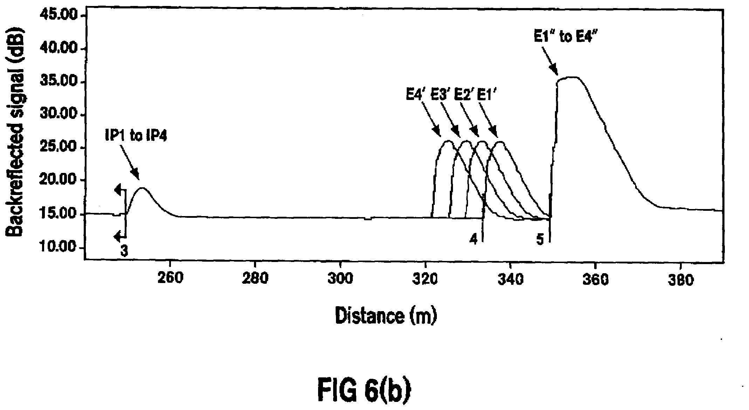

As illustrated in Figure 6(a) for the case where fiber DF1/1 is correctly connected to input port IP1 of the event feature box EB, each OTDR trace will show a series of events, the first **1** corresponding to the connection between the OTDR and the launch fiber, the second **2** corresponding to the connection between the launch fiber and the FUT, the third **3** corresponding to the connection between the FUT and the input port IP1, the fourth **4** corresponding to the closer event feature E1' and the fifth **5** corresponding to the furthermost event feature E1". The portion of the trace including the events corresponding to the event features of the event feature box EB is shown to an expanded distance scale in Figure 6(b). It should be noted that, as discussed earlier, the third event may not be visible if APC-type connectors are used for mating the FUT to the input port IP1.

Figure 6(b) shows, using broken lines, the locations of events corresponding to event features E2', E3' and E4' which would be generated if the fiber were connected to input ports IP1, IP2 and IP3, respectively. In each trace, the event 5, representing a respective one of event features E1" - E4", is at the same optical distance from the respective ports regardless of the input port to which the fiber is connected, and constitutes a reference event in each OTDR trace. Hence, the difference in spacing between the five events **1** to **5** and in particular the difference between fourth event **4** corresponding to the respective one of event features E1', E2', E3' and E4' and the fifth event **5** corresponding to the respective one of furthermost (reference) event features E1", E2", E3", E4", allows the user to identify the input ports on the event feature box EB to which the fibers DF1/1 to DF1/4 are connected. Following this identification, the technician may go on to perform various other analyses of the OTDR measurements, or undertake new measurements on the same fibers, in known manner.

It should be noted that it is often the case that, in normal operation of a PON, the fibers comprising the distribution cables DFC1, DFC2 are not connected directly to the FDH but rather are connected to a patch panel (not shown) from which jumper cables connect them to the FDH. However, the length of these jumper cables is generally sufficiently short (typically 1 - 2 m) that, when connected so as to join the plurality of ports of the FDH with the corresponding plurality of ports of the patch panel, their connections effectively constitute only one event feature producing only one detectable event.

Once the various measurements have been made, the technician will restore the connections at the terminal drop box DB1, return to the FDH location, remove the event feature box EB and restore the connections between the properly identified distribution fibers and the FDH. If desired, the process can be repeated for other groups of fibers and terminal drop boxes. An advantage of this procedure is that it can be carried out by one person, whereas known techniques usually require two people.

After installing the event feature box EB, the user usually will take steps to ensure that the connections between the distribution fibers and the input ports of the event feature box are satisfactory, i.e., not unduly lossy, before traveling to the terminal drop box, which might be several kilometers away. Hence, it is desirable to check the connections by making a loss measurement. This can be achieved by providing the event feature box EB with an additional set of monitoring ports enabling an OTDR to be used to measure loss at each of the input connectors.

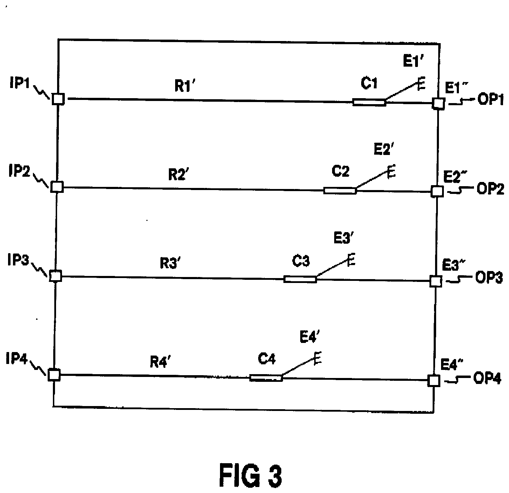

Such an arrangement is illustrated in Figure 3, which shows an event feature box EB similar to that shown in Figure 2, but in which the first event features E1' to E4' are shown to be provided by branch couplers C1 to C4 having their respective inputs connected to respective ends of the termination fiber sections R1' to R4', respectively. The branch couplers each have a reflector at one output port, e.g., a mirror surface of the output port, at an optical distance from the launch coupler less than the spatial resolution of the OTDR. Second outputs of the four branch couplers C1 to C4 are connected to additional monitoring ports OP1 to OP4, respectively. The mirror surfaces, in combination with the respective coupling losses of the respective branch couplers, constitute the first set of event features E1' to E4'. The monitoring ports, when left open, constitute the second set of event features E1" to E4", respectively. It should be noted that the first set of events are created by a combination of reflectance and attenuation.

It should also be noted that it is not essential for the mirror to be at a distance from the branching coupler that is less than the OTDR resolution. It could be further away, and this would then produce two distinct events: an attenuation event due to the coupler and a reflection event due to the mirror.

In addition, the monitoring ports OP1 to OP4 may be connected to an OTDR, conveniently the same one that will be used subsequently at the terminal drop box location for identifying the ports of the event feature box EB and characterizing the fibers and connections. In this case, however, the OTDR is used to launch light into each of the distribution fibers DF1/1 to DF1/4 by way of the corresponding path formed by the respective one of the monitoring ports OP1 to OP4, the input ports IP1 to IP4, the intervening termination fiber, and the corresponding one of the connectors connecting the fibers to the input ports. It should be noted that no events are caused by the mirrors E1' to E4' when the light is launched "backwards" into the event feature box EB. As well, depending upon the splitting ratio of the respective one of the branch couplers C1 to C4, the attenuation loss of the coupler alone may or may not produce a significant event on the respective OTDR trace. Because the distance from each of the monitoring ports OP1 to OP4 to the corresponding one of input ports IP1 to IP4 is the same, and known, the user can check the quality of the connections to the distribution fibers and remake them if necessary. This can avoid the user having to travel to and fro between the FDH and the drop box to fix bad connections which otherwise would only become apparent when making the measurements at the terminal drop box.

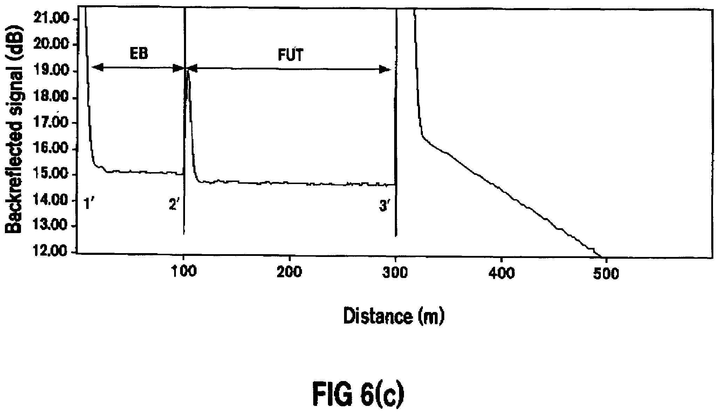

Figure 6(c) shows a trace that may be seen when using this arrangement, whereby the OTDR light is launched into a respective one of the monitoring ports OP1 to OP4. Event 2' corresponds to residual reflection and attenuation loss of the connection between the corresponding one of the input ports IP1 to IP4 and the corresponding one of the fibers DF1/1 to DF1/4. It would of course be desirable for the technician to minimize this reflection and attenuation, e.g. by properly cleaning the connectors, before measurements are undertaken at the Distribution Box (DB1) end of the cable DFC1.

Some connectors, e.g. APC connectors, produce such low losses that the event generated by the connector is difficult to identify. In the event feature unit EB shown in Figure 2, the event features E1", E2", E3" and E4" all are the same distance from the input ports IP1, IP2, IP3 and IP4, respectively. Consequently, once the event corresponding to one of event features E1", E2", E3" and E4" has been located in the corresponding OTDR trace, the position of the connector event corresponding to the respective one of the input ports IP1 to IP4 can be determined and the trace examined closely to determine loss, for example. It should be noted that, when the monitoring ports OP1/4 are used with the OTDR, each is in turn connected to the OTDR launch fiber. Hence, the amplitudes of the reflections from E1" to E4" are reduced as compared with the case where the connector is left open, as when using the event feature box EB for OTDR testing from the terminal drop box end, but are nevertheless clearly visible, since APC-type connectors are not used.

It should be appreciated that it would be possible to make the lengths L1', L2', L3' and L4' of termination fiber sections R1', R2', R3' and R4' (see Figures 2 and 3) equal to each other so that each of the event features E1', E2', E3' and E4' would be the same predetermined distance from the corresponding one of the input ports IP1 to IP4. As before, the fiber sections R1", R2", R3" and R4" would have differing lengths *1, *2, *3 and *4. The positions of the input ports would then be determined with reference to the events corresponding to the event features E1', E2', E3' and E4'. As discussed hereinbefore, however, no events are caused by the event features E1' to E4' when the light is launched "backwards" into the event feature box EB using the configuration shown in Figure 3. It should be noted that, when light is launched "backwards" in this way, the ability to identify the location of a very low loss connector would usually be compromised.

It should also be appreciated that the event features E1", E2", E3" and E4" could be distinct from the event features caused by the open connectors on the monitoring ports OP1 to OP4. For example, event features E1", E2", E3" and E4" could be separate reflectors spaced from the monitoring ports by more than the resolution of the OTDR.

The signature applying means may take various forms. For example, a reflectance might be provided by a mirror reflector, as described above, a reflective Bragg grating, and so on. Alternatively, the signature applying means might each comprise a localized loss generator, such as a lossy fusion splice or a high attenuation piece of fiber. It would also be possible to use a combination of loss and reflectance.

It is also possible to use a characteristic of each event feature (such as its reflectance value) to produce at least one of the two events (e.g. OTDR peak position and amplitude) which uniquely identify each of the termination fibers; in that case, only one event feature would be needed for each distribution fiber or termination fiber path, and the distances L1' to L4' would be the same.

It is also envisaged that a combination of the length differences (*1, *2, *3 and *4) and the characteristics of the internal event features could both be used to uniquely identify each of the termination fibers.

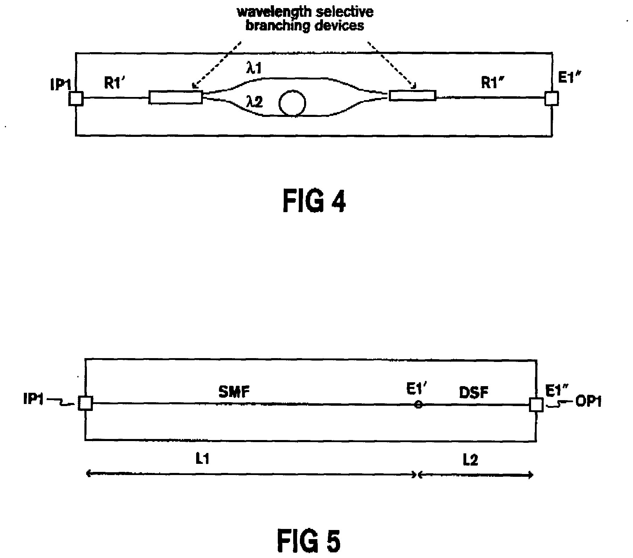

It is also envisaged that the event feature box EB could use optical elements that behave differently at two (or more) test wavelengths, as illustrated in Figure 4 which shows signature applying means in the form of a pair of splitters, one used as a combiner, interposed between the termination fibers R1' and R1". Two parallel branch paths (fibers) interconnect the ports of the two splitters. The two branch paths L1, L2 have different lengths and the splitters split the light according to wavelength, namely λ1 and λ2. The difference in optical path length between the two wavelengths would vary from one fiber path to the next, so the difference could be used to uniquely identify each termination fiber. The total path length for one wavelength, λ1 for example, would be constant for all optical paths within the event feature box EB.

The use of wavelength selective devices could also be combined with internal event features E1', E2', E3' and E4'. For example, the path lengths L1' to L4', to event features E1' to E4', could be used to provide the constant length and the paths for λ2 could be used to uniquely identify each fiber in the event feature box EB with a specific reflectance, loss or combination of reflectance and loss.

Figure 5 illustrates another alternative implementation enabling identification of each fiber, or the port of the signature-applying means (e.g., EB) to which it is connected. It is well known that a connection between two fibers having different backscatter ratios will exhibit an event, e.g., a loss or a gain, when tested with an OTDR. This approach is very similar to encoding with splice loss except for the physical origin of the event signature.

For example, as illustrated in Figure 5, a two-section optical path comprising a single mode fiber (SMF) section followed by a dispersion-shifted fiber (DSF) section could be used instead of fiber sections being constituted of the same fiber kind, with localized losses or reflectances, illustrated in Figures 2 and 3. The embodiment of Figure 5 uses a combination of concatenated fiber sections SMF1 of length L1, and DSF of length L2 that exhibit different Rayleigh backscatter ratios. A detectable event will be created corresponding to the point of connection (e.g. fusion splice) between the two fiber types. The concatenated fibers sections are shown connected between the input port IP1 and monitoring port OP1. Similar concatenated fiber sections would be connected between the other input port and the respective monitoring port.

The relative lengths of the two sections would be different for each input port, providing the required different signatures to enable the user to identify the different input ports to which the distribution fibers are connected.

The total length of the two sections would be kept constant in order to provide a detectable feature that is localized at a known distance from the event feature E" at the monitoring port OP1.

### Automated Application

A plurality of signature-applying means embodying the present invention allow reliable and efficient identification of fibers within a cable that contains many fibers, facilitating subsequent characterization of the fibers, if desired. In order to reduce the time required to perform the cable characterization and also to reduce the complexity for the operator doing the test, it is highly desirable to automate this application.

Since the identification of each termination fiber is performed with an internal event, the overall length can be maintained constant for all termination fibers. This is advantageous because having a constant and known length for all termination fibers allows the use of a more robust algorithm to evaluate the quality of the initial connection of the signature-applying means (e.g., EB) to the fiber-under-test. Since the OTDR can be programmed to look at a precise position in the trace to validate the connection, it can be done automatically. In other words, it removes the need for the user to interpret the OTDR trace in order to determine not only where the initial connection is, but also how good the connection is.

In addition, having a constant and known length for all optical paths in the event feature box EB, or between a particular event feature and the associated input port in the event feature box EB, allows the OTDR to automatically remove the contribution of the fiber paths in the event feature box EB from the fiber-under-test loss measurement. Advantageously, it can be done without any intervention or interpretation from the operator since the length that has to be removed is always the same. Also, having a constant and known length for all optical paths in the event feature box EB allows the OTDR to detect, via a measurement taken from each of the monitoring ports OP1 to OP4, each connection between each FUT and the corresponding input port of the event feature box EB, thereby permitting the technician to clean or repair the corresponding connection before undertaking measurements from the Distribution Box DB1 at the opposite end of the FUT.

Identification of a particular termination fiber from its signature may be carried out by comparing the location of trace events arising from the signature-applying means EB with a predetermined look-up table stored in the OTDR unit. This look-up table will contain trace event locations corresponding to each of the N ports of the signature-applying unit EB.

### INDUSTRIAL APPLICABILITY

An advantage of embodiments of the present invention is that they are capable of providing:
1. an OTDR signature that allows the identification of which termination fiber is connected to a fiber-under-test;
2. a way to identify the location of the end of the fiber-under-test even when the connection is not detectable by the OTDR;
3. a way to validate the quality of the connection between the event feature box EB and the FUT at the time that the connection is made;
4. a straightforward way to automate the OTDR software analysis algorithms to identify unambiguously which fiber is connected to a particular port of the event feature box.

Disclosures include:
a) Apparatus for identifying each of a plurality of fibers (DF1/1,...,DF2/4) comprising an OTDR for launching light into a first end of each of the fibers in tum and obtaining a corresponding plurality of OTDR traces therefrom, and characterized by_ an event box (EB) for connection to opposite ends of the fibers comprising signature applying means comprising event feature means for producing in OTDR traces a plurality of unique signatures each comprising at least two events, each of the said at least two events being detectable by at least one of its position, its amplitude, and a wavelength at which it is detected, each of the fibers being identifiable by detecting the said at least two events of the respective unique signature in the at least one OTDR trace corresponding to said respective signature applying means.
b) Signature-applying means for use with an OTDR in identifying each of a plurality of fibers (DF1, ... ,DF4) having approximately the same length, the signature-applying means (EB) comprising event feature means for producing corresponding events in backscatter traces resulting from light launched into each of the fibers by the OTDR, thereby generating in said traces a plurality of signatures corresponding to the plurality of fibers, respectively, each signature being unique and comprising at least two events in at least one trace, wherein each of the fibers is identifiable by detecting the said corresponding signature.
   Preferred exemplary apparatus disclosures include:
c) according to paragraph a) wherein the signature-applying means comprises, for generating for each of the different signatures, at least two backscatter event features spaced apart from each other by a predetermined distance that is different from the predetermined distance between the at least two backscatter event features for generating other signatures.
d) according to paragraph a) or c) wherein the signature-applying means is arranged to apply the signature for each of the traces by amplitude modulation of the back-reflected light, such that the amplitude of a resulting event differs from one signature to another.
e) according to paragraph d) wherein the signature-applying means comprises means (C1,E1',..., C4,E4') for providing a predetermined value of a loss or attenuation to effect the amplitude modulation.
f) according to any of paragraphs a) c) d) or e) wherein the signature-applying means comprises means for applying to each trace information enabling the part of the OTDR trace corresponding to the location of the end of the fiber-under-test to be identified regardless of whether or not the connection between the fiber-under-test and the signature-applying means exhibits a reflectance or loss less than the measuring capability of the OTDR.
g) according paragraph f) wherein the information comprises events generated by a plurality of event features spaced from respective ones of a corresponding plurality of input ports to which the fibers will be connected, the event features being spaced from respective ones of the input ports (IP1,..., IP4) by the same predetermined distance, each enabling said part of the corresponding trace to be determined by reference to said event and the known predetermined distance.
h) according to paragraph g) wherein the event features at said predetermined spacing each comprise an open monitoring port (OP1,..., OP4) which generates a reflective said event in the corresponding OTDR trace.
i) according to paragraph h) wherein each monitoring port is adapted for connection thereto of an OTDR for analyzing backscatter from the connection to the FUT to determine the quality of such connection.
j) according to any of paragraphs a) or c) to i) wherein event feature means of the signature-applying means comprises at least one of a reflector, reflective surface at a splitter/coupler port, single reflective Bragg grating and a single attenuator.
k) according to any of paragraphs a) or c) to i) wherein event feature means of the signature-applying means comprises a combination of reflective and attenuating elements.
l) according to paragraph k) wherein event features means of the signature-applying means comprises at least one splitter, one arm of the splitter being terminated with a reflective surface (E1',..., E4') at a short distance therefrom the splitter providing attenuation and the mirror providing the reflectance.
m) according to paragraph k) wherein event feature means of the signature-applying means comprises two closely-spaced pairs of mating connectors.
n) according to paragraph m) wherein the mating connectors are at respective ends of patch cords connecting the signature-applying means to a patch panel and the patch panel to the FUTs.
o) according to paragraph f), g) or h) wherein the signature-applying means has a plurality of input ports (IP1,..., IP4) for connection to respective connectors of the plurality of fibers, and a corresponding plurality of reference event feature means coupled to the input ports, respectively, and each spaced from the respective input port by substantially the same predetermined optical distance as the other event feature means.
   Preferred/exemplary signature applying-means may be provided:
p) further comprising a plurality of input ports (IP1,..., IP4) for connection to respective ones of the plurality of fibers and a plurality of monitoring ports (OP1,..., OP4) connected internally to the input ports, the monitoring ports being adapted for connection to an OTDR to allow characterization of the connections between the input ports and the fibers.
q) further comprising a plurality of input ports (IP1,..., IP4) for connection to respective ones of the plurality of fibers, wherein one of the at least two event feature means applies a reference event in each unique signature, said reference events being the same predetermined effective optical distance from the respective said input ports.
r) wherein the event feature means applies first and second reference events which are substantially the same in each signature and at least one event between the first and second reference events, which is different in each unique signature.

Although embodiments of the invention have been described and illustrated in detail, it is to be clearly understood that the same are by way of illustration and example only and not to be taken by way of the limitation, the scope of the present invention being limited only by the appended claims.

## Claims

1. A method of using an optical time domain reflectometer (OTDR) and signature-applying means in the form of an event feature box (EB) to identify each of a plurality of fibers each having first and second ends, the signature-applying means comprising a plurality of input ports (IP1, ... , IP4) for removably connecting to the plurality of fibers (DF1, ... , DF4), respectively, and a plurality of event feature means (E1', ... E4'; E1", ... , E4") connected to said plurality of input ports for producing, in OTDR traces for fibers connected to said input ports, respectively, a corresponding plurality of unique signatures, each unique signature comprising at least two events (4, 5), the method being **characterized by** the steps of:
connecting the second end of each of the plurality of fibers to a respective one of said plurality of input ports (IP1, ... , IP4) of the signature-applying means (EB);
using the OTDR, launching light into the first end of each of the fibers and obtaining at least one OTDR trace for each fiber comprising a respective unique signature; and
identifying each of the fibers by detecting the said at least two events of the respective unique signature.

2. A method according to claim 1, wherein said at least two events are distinguishable from any event (3) in that OTDR trace, attributable to the corresponding input port.

3. A method according to claim 1, wherein one of said at least two events of the unique signature comprises a reference event.

4. A method according to claim 3, wherein each said reference event in each unique signature corresponds to substantially the same predetermined effective optical distance from its corresponding said input port.

5. A method according to claim 4, wherein each unique signature comprises first and second reference events of the OTDR trace common to each signature, and at least one event between first and second reference events, said at least one event being different for each unique signature.

6. A method according to any one of claims 1 to 5, **characterized in that** each of the signatures is applied to the respective one of the said traces by generating at least two backscatter events spaced apart from each other by a predetermined effective optical distance that is different from the predetermined distance between the at least two backscatter events of the signatures of the other traces.

7. A method according to any one of claims 1 to 6, **characterized in that** each signature is applied to the respective one of the traces by amplitude modulation of the back-reflected light, such that the amplitude of a resulting event in the OTDR trace differs from one signature to another.

8. A method according to claim 1, **characterized in that** each of the signatures is applied to the respective one of the said traces by amplitude modulation generating at least two backscatter events spaced apart from each other by a predetermined effective optical distance that is different from a corresponding predetermined effective optical distance between at least two backscatter events of the signatures of the other traces, such that the amplitude of at least one of the resulting events in the OTDR trace differs from one signature to another.

9. A method according to claim 7, **characterized in that** the amplitude modulation is provided by an event feature producing a predetermined change in value of a loss, a gain, or a reflectance.

10. A method according any one of claims 1 to 9, **characterized in that** each the signature contains information enabling the part of the OTDR trace corresponding to a connection between said second end of a fiber and a respective input port of the signature-applying means to be identified regardless of whether or not the connection between the fiber and the signature-applying means exhibits a reflectance or loss less than the measuring capability of the OTDR.

11. A method according to claim 10, **characterized in that** the information comprises reference events generated by a respective one of said plurality of reference event feature means that are spaced from respective ones of the plurality of input ports by the same predetermined reference effective optical distance, each enabling said part of the corresponding trace to be determined by reference to said reference event and the predetermined reference effective optical distance.

12. A method according to claim 11, **characterized in that** the signature-applying means comprises a plurality of additional ports (OP1, ... , OP4) each in optical continuity with a respective one of said plurality of input ports, each additional port, when open, generating a reflective event as said reference event in the corresponding OTDR trace.

13. A method according to claim 12, **characterized in that** the method further comprises a preceding step of launching light into one of said additional ports by means of an OTDR connected locally thereto, obtaining a validation OTDR trace from said one of said additional ports and from said validation OTDR trace validating a quality of the connection between the corresponding input port and fiber connected thereto.

14. Signature-applying means in the form of an event feature box (EB) for use with an optical time domain reflectometer (OTDR) in identifying each of a plurality of fibers (DF1,...,DF4), the signature-applying means (EB) comprising a plurality of input ports (IP1, ... , IP4) for removably connecting to the plurality of fibers (DF1, ... , DF4), respectively, and a plurality of event feature means each connected to a respective one of said input ports, each event feature means producing in OTDR traces of a fiber corresponding to one of said input ports a respective one of a plurality of unique signatures, each signature comprising at least two events in a corresponding OTDR trace.

15. The signature-applying means according to claim 14, further comprising a plurality of additional ports each connected to a respective one of the input ports, wherein one of said two events is generated by a respective open one of said additional ports.

## Patentansprüche

1. Verfahren zur Verwendung eines optischen Zeitbereichsreflektometers (OTDR) und eines signaturapplizierenden Mittels in Form einer Ereignisfunktions-Box (EB) zum Identifizieren jeder einer Mehrzahl von Fasern, die jeweils erste und zweite Enden aufweisen, wobei das signaturapplizierende Mittel eine Mehrzahl von Eingangsports (IP1, ..., IP4) zum lösbaren Anbinden an die Mehrzahl von Fasern (DF1, ..., DF4) bzw. eine Mehrzahl von Ereignisfunktions-Mitteln (E1', ... E4'; E1", ..., E4") mit Anbindung an die Mehrzahl von Eingangsports zum Produzieren, in OTDR-Spuren bei Fasern mit Anbindung an die Eingangsports, einer entsprechenden Mehrzahl von eindeutigen Signaturen, wobei jede eindeutige Signatur mindestens zwei Ereignisse (4, 5) umfasst, umfasst, wobei das Verfahren durch die folgenden Schritte gekennzeichnet ist:
Anbinden des zweiten Endes jeder der Mehrzahl von Fasern an einen jeweiligen der Mehrzahl von Eingangsports (IP1, ..., IP4) des signaturapplizierenden Mittels (EB);
Verwenden des OTDR, wobei Licht in das erste Ende jeder der Fasern eingebracht und mindestens eine OTDR-Spur bei jeder Faser, die eine jeweilige eindeutige Signatur umfasst, erhalten wird; und
Identifizieren jeder der Fasern durch Detektieren der mindestens zwei Ereignisse der jeweiligen eindeutigen Signatur.

2. Verfahren nach Anspruch 1, wobei die mindestens zwei Ereignisse von jeglichem Ereignis (3) in dieser OTDR-Spur, das dem entsprechenden Eingangsport zuschreibbar ist, unterscheidbar sind.

3. Verfahren nach Anspruch 1, wobei eines der mindestens zwei Ereignisse der eindeutigen Signatur ein Bezugsereignis umfasst.

4. Verfahren nach Anspruch 3, wobei jedes Bezugsereignis in jeder eindeutigen Signatur im Wesentlichen dem gleichen vorbestimmten effektiven optischen Abstand von seinem entsprechenden Eingangsport entspricht.

5. Verfahren nach Anspruch 4, wobei jede eindeutige Signatur erste und zweite Bezugsereignisse der OTDR-Spur, die jeder Signatur gemeinsam sind, und mindestens ein Ereignis zwischen ersten und zweiten Bezugsereignissen umfasst, wobei das mindestens eine Ereignis bei jeder eindeutigen Signatur unterschiedlich ist.

6. Verfahren nach einem der Ansprüche 1 bis 5, **dadurch gekennzeichnet, dass** jede der Signaturen auf die jeweilige der Spuren appliziert wird, indem mindestens zwei Backscatter-Ereignisse erzeugt werden, die um einen vorbestimmten effektiven optischen Abstand voneinander beabstandet sind, der anders ist als der vorbestimmte Abstand zwischen den mindestens zwei Backscatter-Ereignissen der Signaturen der anderen Spuren.

7. Verfahren nach einem der Ansprüche 1 bis 6, **dadurch gekennzeichnet, dass** jede Signatur auf die jeweilige der Spuren durch Amplitudenmodulation des zurückreflektierten Lichts appliziert wird, so dass die Amplitude eines resultierenden Ereignisses in der OTDR-Spur von einer Signatur zur anderen unterschiedlich ist.

8. Verfahren nach Anspruch 1, **dadurch gekennzeichnet, dass** jede der Signaturen auf die jeweilige der Spuren durch Amplitudenmodulation appliziert wird, wodurch mindestens zwei Backscatter-Ereignisse erzeugt werden, die um einen vorbestimmten effektiven optischen Abstand voneinander beabstandet sind, der anders ist als ein entsprechender vorbestimmter effektiver optischer Abstand zwischen den mindestens zwei Backscatter-Ereignissen der Signaturen der anderen Spuren, so dass die Amplitude mindestens eines der resultierenden Ereignisse in der OTDR-Spur von einer Signatur zur anderen unterschiedlich ist.

9. Verfahren nach Anspruch 7, **dadurch gekennzeichnet, dass** die Amplitudenmodulation durch eine Ereignisfunktion bereitgestellt wird, die eine vorbestimmte Wertänderung eines Verlusts, eines Zugewinns oder einer Reflexion produziert.

10. Verfahren nach einem der Ansprüche 1 bis 9, **dadurch gekennzeichnet, dass** jede Signatur Informationen enthält, die es ermöglichen, den Teil der OTDR-Spur, der einer Verbindung zwischen dem zweiten Ende einer Faser und einem jeweiligen Eingangsport des signaturapplizierenden Mittels entspricht, zu identifizieren, ungeachtet dessen, ob die Verbindung zwischen der Faser und dem signaturapplizierenden Mittel eine Reflexion oder einen Verlust von weniger als dem Messvermögen des OTDR aufweist oder nicht.

11. Verfahren nach Anspruch 10, **dadurch gekennzeichnet, dass** die Informationen Bezugsereignisse umfassen, die durch ein jeweiliges der Mehrzahl von Bezugsereignisfunktions-Mitteln erzeugt werden, die von jeweiligen der Mehrzahl von Eingangsports um den gleichen vorbestimmten effektiven optischen Bezugsabstand beabstandet sind, die es jeweils ermöglichen, den Teil der entsprechenden Spur durch Bezug auf das Bezugsereignis und den vorbestimmten effektiven optischen Bezugsabstand zu bestimmen.

12. Verfahren nach Anspruch 11, **dadurch gekennzeichnet, dass** das signaturapplizierende Mittel eine Mehrzahl von zusätzlichen Ports (OP1, ..., OP4) jeweils in optischer Kontinuität mit einem jeweiligen der Mehrzahl von Eingangsports umfasst, wobei jeder zusätzliche Port, wenn offen, ein reflektives Ereignis als das Bezugsereignis in der entsprechenden OTDR-Spur erzeugt.

13. Verfahren nach Anspruch 12, **dadurch gekennzeichnet, dass** das Verfahren ferner einen vorhergehenden Schritt des Einbringens von Licht in einen der zusätzlichen Ports mittels eines lokal daran angeschlossenen OTDR umfasst, wodurch eine Validierungs-OTDR-Spur aus dem einen der zusätzlichen Ports erhalten und, anhand der Validierungs-OTDR-Spur, eine Qualität der Verbindung zwischen dem entsprechenden Eingangsport und der damit verbundenen Faser validiert wird.

14. Signaturapplizierendes Mittel in Form einer Ereignisfunktions-Box (EB) zur Verwendung mit einem optischen Zeitbereichsreflektometer (OTDR) beim Identifizieren jeder einer Mehrzahl von Fasern (DF1, ..., DF4), wobei das signaturapplizierende Mittel (EB) eine Mehrzahl von Eingangsports (IP1, ..., IP4) zum lösbaren Anbinden an die Mehrzahl von Fasern (DF1, ..., DF4) bzw. eine Mehrzahl von Ereignisfunktions-Mitteln, die jeweils mit einem jeweiligen der Eingangsports verbunden sind, umfasst, wobei jedes Ereignisfunktion-Mittel in OTDR-Spuren einer Faser, die einem der Eingangsports entspricht, eine jeweilige einer Mehrzahl von eindeutigen Signaturen produziert, wobei jede Signatur mindestens zwei Ereignisse in einer entsprechenden OTDR-Spur umfasst.

15. Signaturapplizierendes Mittel nach Anspruch 14, ferner umfassend eine Mehrzahl von zusätzlichen Ports, die jeweils mit einem jeweiligen der Eingangsports verbunden sind, wobei eines der zwei Ereignisse durch einen jeweiligen offenen der zusätzlichen Ports erzeugt wird.

## Revendications

1. Procédé d'utilisation d'un réflectomètre optique temporel (OTDR) et d'un moyen d'application d'une signature sous la forme d'un boîtier de caractéristique d'événement (EB) pour identifier chacune d'une pluralité de fibres possédant chacune des première et seconde extrémités, le moyen d'application d'une signature comprenant une pluralité de ports d'entrée (IP1, ..., IP4) destinés à se connecter de manière amovible à la pluralité de fibres (DF1, ..., DF4), respectivement, et une pluralité de moyens de caractéristique d'événement (E1', ... E4' ; E1", ... , E4") connectés à ladite pluralité de ports d'entrée pour produire, dans les traces OTDR des fibres connectées auxdits ports d'entrée, respectivement, une pluralité correspondante de signatures uniques, chaque signature unique comprenant au moins deux événements (4, 5), le procédé étant **caractérisé par** les étapes de :
connexion de la seconde extrémité de chacune de la pluralité de fibres à l'un respectif de ladite pluralité de ports d'entrée (IP1, ..., IP4) du moyen d'application d'une signature (EB) ;
utilisation de l'OTDR, injection de lumière dans la première extrémité de chacune des fibres et obtention d'au moins une trace OTDR pour chaque fibre comprenant une signature unique respective ; et
identification de chacune des fibres en détectant lesdits au moins deux événements de la signature unique respective.

2. Procédé selon la revendication 1, dans lequel lesdits au moins deux événements sont distinguables de tout autre événement (3) dans cette trace OTDR, attribuable au port d'entrée correspondant.

3. Procédé selon la revendication 1, dans lequel l'un desdits au moins deux événements de la signature unique comprend un événement de référence.

4. Procédé selon la revendication 3, dans lequel chacun dit événement de référence dans chaque signature unique correspond à sensiblement la même distance optique effective prédéterminée depuis son dit port d'entrée correspondant.

5. Procédé selon la revendication 4, dans lequel chaque signature unique comprend des premier et second événements de référence de la trace OTDR commune à chaque signature, et au moins un événement entre les premier et second événements de référence, ledit au moins un événement étant différent pour chaque signature unique.

6. Procédé selon l'une quelconque des revendications 1 à 5, **caractérisé en ce que** chacune des signatures est appliquée à l'une respective desdites traces en générant au moins deux événements de rétrodiffusion espacés l'un de l'autre par une distance optique effective prédéterminée qui est différente de la distance prédéterminée entre les au moins deux événements de rétrodiffusion des signatures des autres traces.

7. Procédé selon l'une quelconque des revendications 1 à 6, **caractérisé en ce que** chaque signature est appliquée à l'une respective des traces par modulation d'amplitude de la lumière rétrodiffusée, de telle sorte que l'amplitude d'un événement résultant dans la trace OTDR diffère d'une signature à l'autre.

8. Procédé selon la revendication 1, **caractérisé en ce que** chacune des signatures est appliquée à l'une respective desdites traces par modulation d'amplitude générant au moins deux événements de rétrodiffusion espacés l'un de l'autre par une distance optique effective prédéterminée qui est différente d'une distance optique effective prédéterminée correspondante entre au moins deux événements de rétrodiffusion des signatures des autres traces, de telle sorte que l'amplitude d'au moins l'un des événements résultants dans la trace OTDR diffère d'une signature à l'autre.

9. Procédé selon la revendication 7, **caractérisé en ce que** la modulation d'amplitude est fournie par une caractéristique d'événement produisant un changement prédéterminé dans la valeur d'une perte, d'un gain, ou d'une réflexion.

10. Procédé selon l'une quelconque des revendications 1 à 9, **caractérisé en ce que** chaque signature contient des informations permettant à la partie de la trace OTDR correspondant à une connexion entre ladite seconde extrémité d'une fibre et un port d'entrée respectif du moyen d'application d'une signature d'être identifiée indépendamment du fait que la connexion entre la fibre et le moyen d'application d'une signature présente ou ne présente pas une réflexion ou une perte inférieure à la capacité de mesure de l'OTDR.

11. Procédé selon la revendication 10, **caractérisé en ce que** les informations comprennent des événements de référence générés par l'un respectif de ladite pluralité de moyens de caractéristique d'événement de référence qui sont espacés de ceux respectifs de la pluralité de ports d'entrée par la même distance optique effective de référence prédéterminée, chacun permettant à ladite partie de la trace correspondante d'être déterminée en référence audit événement de référence et à la distance optique effective de référence prédéterminée.

12. Procédé selon la revendication 11, **caractérisé en ce que** le moyen d'application d'une signature comprend une pluralité de ports supplémentaires (OP1, ..., OP4) chacun en continuité optique avec l'un respectif de ladite pluralité de ports d'entrée, chaque port supplémentaire, lorsqu'il est ouvert, générant un événement réflectif en tant que dit événement de référence dans la trace OTDR correspondante.

13. Procédé selon la revendication 12, **caractérisé en ce que** le procédé comprend en outre une précédente étape d'injection de lumière dans l'un desdits ports supplémentaires au moyen d'un OTDR connecté localement à celui-ci, obtention d'une trace OTDR de validation depuis ledit l'un desdits ports supplémentaires et depuis ladite trace OTDR de validation validant une qualité de la connexion entre le port d'entrée correspondant et la fibre connectée à celui-ci.

14. Moyen d'application d'une signature sous la forme d'un boîtier de caractéristique d'événement (EB) à utiliser avec un réflectomètre optique temporel (OTDR) pour identifier chacune d'une pluralité de fibres (DF1, ..., DF4), le moyen d'application d'une signature (EB) comprenant une pluralité de ports d'entrée (IP1, ..., IP4) destinés à se connecter de manière amovible à la pluralité de fibres (DF1, ..., DF4), respectivement, et une pluralité de moyens de caractéristique d'événement chacun connecté à l'un respectif desdits ports d'entrée, chaque moyen de caractéristique d'événement produisant dans des traces OTDR d'une fibre correspondant à l'un desdits ports d'entrée l'une respective d'une pluralité de signatures uniques, chaque signature comprenant au moins deux événements dans une trace OTDR correspondante.

15. Moyen d'application d'une signature selon la revendication 14, comprenant en outre une pluralité de ports supplémentaires chacun connecté à l'un respectif des ports d'entrée, dans lequel l'un desdits deux événements est généré par l'un respectif ouvert desdits ports supplémentaires.
